(19) **Europäisches Patentamt**

**European Patent Office**

**Office européen des brevets**

(11) **EP 0 548 822 B1**

(12) **EUROPÄISCHE PATENTSCHRIFT**

(45) Veröffentlichungstag und Bekanntmachung des Hinweises auf die Patenterteilung:
**05.06.1996 Patentblatt 1996/23**

(51) Int Cl.6: **G02B 1/10**, C09D 5/33, C09D 201/00

(21) Anmeldenummer: **92121540.6**

(22) Anmeldetag: **18.12.1992**

(54) **IR-reflektierender Körper**

Infra-red reflecting material

Matériau réfléchissant les rayons infra-rouge

(84) Benannte Vertragsstaaten:
**AT BE CH DE DK ES FR GB IT LI NL SE**

(30) Priorität: **21.12.1991 DE 4142542**

(43) Veröffentlichungstag der Anmeldung:
**30.06.1993 Patentblatt 1993/26**

(73) Patentinhaber: **RÖHM GMBH**
**D-64293 Darmstadt (DE)**

(72) Erfinder:
- **Benz, Volker, Dr.**
  **W-6128 Höchst 2 (DE)**
- **Scharnke, Wolfgang**
  **W-6100 Darmstadt (DE)**
- **Meier-Kaiser, Michael, Dr.**
  **W-6102 Pfungstadt (DE)**
- **Müller, Michael, Dr.**
  **W-6140 Bensheim 3 (DE)**

(56) Entgegenhaltungen:
EP-A- 0 048 498          EP-A- 0 186 607
EP-A- 0 428 937          DE-A- 2 719 170
DE-B- 2 544 245          US-A- 4 916 014

**Beschreibung**

Die Erfindung betrifft einen lichtdurchlässigen, lichtstreuenden, IR-reflektierenden Körper von weißlichem Aussehen, enthaltend ein Basismaterial mit hoher Lichtdurchlässigkeit und IR-reflektierende, parallel zur Scheibenoberfläche ausgerichtete Teilchen, sowie dessen Verwendung als wärmedämmendes und sonnenschützendes Bedachungsmaterial.

Stand der Technik

Aus der deutschen Patentschrift DE-C 25 44 245 ist eine Tafel der oben beschriebenen Art aus Polymethylmethacrylat mit einem Gehalt an lichtreflektierenden, parallel zur Oberfläche ausgerichteten Teilchen bekannt. Ihre Schichtdicke ist so bemessen, daß sie sichtbares Licht weitgehend durchlassen und infrarote Strahlung weitgehend reflektieren.

Der bekannte Körper enthält die lichtreflektierenden Teilchen in dem Basismaterial aus Polymethylmethacrylat. Sie werden in das flüssige Methylmethacrylat-Monomer eingebracht, dieses in eine aus parallel angeordneten Glasplatten gebildete Polymerisationskammer eingefüllt und teilweise polymerisiert. Bis zu diesem Zeitpunkt sind die Teilchen auf die untere Glasplatte abgesunken. Durch eine Parallelverschiebung dieser Platte werden die Teilchen parallel zur Oberfläche ausgerichtet und in dieser Stellung bei Fortsetzung der Polymerisation festgehalten. Durch diese Behandlungsstufe ist das Herstellungsverfahren aufwendig und teuer.

EP-A 340 313 beschreibt sonnenstrahlungsabweisende Überzüge für Schiffe, Tanks, Gebäude und dergl., um ihre Erwärmung in der Sonne zu vermindern. Die Überzüge enthalten ein Bindemittel, ein hitze-reflektierendes Pigment und gegebenenfalls beliebige Farbpigmente.

Nach EP-A 428 937 werden Polyethylenbahnen für Gewächshäuser durch Streichen oder Spritzen mit einem Überzug versehen, der lichtreflektierende Pigmente in einer Matrix aus einem Lackbindemittel enthält. Da die Pigmentteilchen durch das Auftragsverfahren nicht orientiert werden, haben sie nur eine schattierende Wirkung und ergeben eine unbefriedigende Transmission. Infolge der geringen Haftung üblicher Lackbindemittel an Polyethylen kann die Beschichtung leicht mit einem Wasserstrahl von der beschichteten Bahn abgewaschen werden.

Aufgabe und Lösung

Der Erfindung liegt die Aufgabe zugrunde, witterungsbeständige IR-reflektierende Körper mit hoher Lichtdurchlässigkeit auf einfache Weise zugänglich zu machen. Insbesondere soll bei hoher IR-Reflexion eine möglichst hohe Transmission (T) im sichtbaren Bereich bei 380 - 780 nm, aber nur eine begrenzte Gesamtenergiedurchlässigkeit (g) und eine Selektivitätskennzahl, ausgedrückt durch das Verhältnis T/g, über 1,15 erreicht werden.

Gegenstand der Erfindung nach Anspruch 1 ist ein lichtdurchlässiger, IR-reflektierender Körper, enthaltend ein steifes, amorphes Basismaterial aus lichtdurchlässigem Kunststoff und IR-reflektierende, parallel zur Oberfläche ausgerichtete Teilchen, wobei erfindungsgemäß der lichtdurchlässige, IR-reflektierende Körper eine Transmission im sichtbaren Bereich (T) von 45 bis 75 %, eine Gesamtenergiedurchlässigkeit (g) von 30 bis 60 % und ein Verhältnis T/g > 1,15 hat. Die IR-reflektierenden, parallel zur Oberfläche ausgerichteten Teilchen sind in einer 5 bis 40 Mikrometer dicken, an dem Basismaterial haftenden Überzugsschicht aus einem transparenten, wasserunlöslichen Bindemittel angeordnet, worin 20 bis 40 Gew.-%, bezogen auf das Gewicht der Überzugsschicht, an rotreflektierenden Teilchen mit einer 60 bis 120 nm dicken Schicht von Titandioxid auf einem blättchenförmigen Trägerpigment enthalten sind.

Vorteile der Erfindung

Durch eine kritische Abstimmung der Dicke der Überzugsschicht, ihrem Gehalt an IR-reflektierenden Teilchen und deren Größenverteilung wird ein erhöhter Anteil von durchgelassenem sichtbarem Licht im Verhältnis zur Gesamtenergiedurchlässigkeit erreicht. Dies drückt sich in den beanspruchten Werten von T, g und T/g aus.

Wenn die Schichtdicke oder der Pigmentgehalt erhöht wird, nimmt T ab. Wird die Schichtdicke oder der Pigmentgehalt vermindert, nimmt g unerwünscht zu. Sind die Pigmentteilchen zu klein oder zu groß, nimmt T/g ab. Dafür sind neben Lichtbrechungs- und Lichtstreuungseffekten auch die Bruchempfindlichkeit großer Pigmentteilchen bei der Verarbeitung verantwortlich. Durch Bruch entstehen kleine Teilchen, was ein ungünstiges T/g-Verhältnis zur Folge hat. Nur in dem beanspruchten engen Merkmalsbereich konnte eine hohe Durchlässigkeit für sichtbares Licht mit geringer IR-Durchlässigkeit verbunden werden.

Weitere Vorteile liegen in der leichten Herstellbarkeit. Während bei den bekannten IR-reflektierenden Platten mit hoher Lichtdurchlässigkeit die Herstellung des Grundkörpers durch ein spezielles Verfahren der radikalischen Polymerisation von Methylmethacrylat mit der Erzeugung der IR-reflektierenden Struktur unmittelbar verbunden war, geht die Erfindung von herkömmlichen Methoden zur Herstellung von lichtdurchlässigen Körpern aus, die mit einfachen, ebenfalls gebräuchlichen Verfahren mit einer IR-reflektierenden Überzugsschicht versehen werden. Dafür kommen insbesondere die Beschichtung eines vorgefertigten lichtdurchlässigen Körpers mit einem zur Bildung der Überzugsschicht geeigneten Lack und die Koextrusion von lichtdurchlässigen Polymethylmethacrylat- oder Polycarbonat-Kunststoffen mit dem Überzugsmaterial in Betracht. Die reflektierende Struktur entsteht auch hier durch eine Scherbehandlung der noch flüssigen Schicht, die jedoch nicht durch zusätzliche Verfahrensmaßnahmen erzeugt wird, sondern bei geeigneten Beschichtungs- und Koextrusionsverfahren von selbst in der erforderlichen Weise auftritt.

Gemäß der Erfindung können beliebig geformte lichtdurchlässige Körper IR-reflektierend ausgerüstet werden und nicht nur die nach dem Polymerisationsverfahren in Flachkammern erhältlichen Platten aus "gegossenem" Polymethylmethacrylat. Damit werden rationell herstellbare Extrusionsprodukte, wie flachen Platten oder Stegdoppelplatten, einer IR-reflektierenden Ausrüstung zugänglich.

Die Erzeugung der IR-reflektierenden Orientierung durch Parallelverschiebung der Flachkammerwände ist ein schwieriger, nur mit speziellen Vorrichtungen durchführbarer Arbeitsgang. Da sich das polymerisierende Basismaterial in seiner vollen Dicke in einem flüssigen Zustand befindet, bedarf es erheblicher Scherbewegungen, um die Orientierung der IR-reflektierenden Teilchen zu bewirken. Im Gegensatz dazu kann die Überzugsschicht bei der Herstellung der erfindungsgemäßen Körper sehr dünn gehalten werden, so daß schon eine geringe Scherbewegung eine starke Orientierung bewirkt. Die Möglichkeiten der Scherbewegung sind vielfältig und können der Eigenart des zu beschichtenden Körpers oder seines Herstellungsverfahrens optimal angepaßt werden. So können z.B. eine Beschichtungszone und eine Scherungszone mit einfachen Mitteln in eine Extrusionsstraße integriert werden. Daher wird der apparative Aufwand wesentlich vermindert und IR-reflektierende Körper zu marktfähigen Preisen verfügbar gemacht.

Die hohe Lichtdurchlässigkeit macht die erfindungsgemäßen Körper beispielsweise als dauerhaftes Bedachungsmaterial insbesondere für Gewächshäuser geeignet. Es ist daher nicht erforderlich, die Beschichtung zwecks stärkeren Lichteinfalls zeitweilig zu entfernen.

Lichtdurchlässigkeit und IR-Reflexionseigenschaften

Der Begriff "lichtdurchlässig" bezieht sich auf den sichtbaren Spektralbereich; zur Charakterisierung dient der Wellenlängenbereich von 380 bis 780 nm, insbesondere die Wellenlänge von 550 nm. Die Lichtdurchlässigkeit, die hier mit T bezeichnet ist, wird in der wissenschaftlichen Literatur überwiegend mit $\tau_{D65}$ symbolisiert. Das Basismaterial und das Bindemittel sollen eine Lichtdurchlässigkeit T von wenigstens 50 %, vorzugsweise 60 bis 94 % haben. Es ist vorteilhaft, wenn sie weitgehend transparent sind. Als infraroter (IR) Spektralbereich gilt im Sinne der Erfindung der Bereich der Wärmestrahlung mit Wellenlängen von 700 bis 2000 nm.

Die Güte der Überzugsschicht wird durch den Quotienten T/g bestimmt, der auch als Selektivitätskennzahl SKZ (nach DIN 67 507) bezeichnet wird; man versteht darunter den Quotienten aus der prozentualen Lichttransmission im sichtbaren Bereich und der prozentualen Gesamtdurchlässigkeit für Strahlungsenergie. Die SKZ ist ein Maß für die IR-Reflexion und insofern auch für die Wirksamkeit von Sonnenschutzverglasungen; sie soll deshalb möglichst hoch sein. Für unbeschichtete PMMA-Scheiben beträgt SKZ = 1,0. Bei goldbedampften Mineralglasscheiben wird SKZ = 1,2 - 1,3 erreicht; ebenso bei Scheiben gemäß DE-A 25 44 245. An einseitig im Sinne der Erfindung beschichteten Scheiben werden SKZ-Werte bis 1,40 erhalten.

Es ist überraschend, daß durch die erfindungsgemäße Überzugsschicht eine höhere Selektivitätskennzahl erreicht wird als bei den nach DE-C 25 44 245 hergestellten Platten, in denen das reflektierende Pigment in der Masse verteilt ist. Im Vergleich dazu sind die Pigmentteilchen in strahlungsabweisenden Überzügen dichter gepackt. Entsprechend der Zielsetzung gemäß EP-A 340 313, die Sonnenstrahlung möglichst weitgehend abzuhalten, war eine deutlich verminderte Selektivitätskennzahl zu erwarten.

Der lichtdurchlässige Körper

enthält ein steifes, lichtdurchlässiges Basismaterial aus Kunststoff, beispielsweise in Gestalt einer ebenen Tafel, einer Stegdoppelplatte oder einer Lichtkuppel. Geeignete Kunststoffe sind z.B. Polystyrol und Styrol-Acrylnitril-Copolymerisate. Bevorzugt sind Polymethylmethacrylat- und Polycarbonat-Kunststoffe. Unter Polymethylmethacrylat werden im Sinne der Erfindung steife amorphe Kunststoffe verstanden, die zu wenigstens 60 Gew.-%, vorzugsweise zu wenigstens 80 Gew.-%, aus Methylmethacrylat aufgebaut sind. Die Polycarbonat-Kunststoffe sind vorwiegend aromatische Polycarbonate von Bisphenolen, insbesondere von Bisphenol A. Durchlässigkeit für IR-Strahlung ist keine wesentliche Voraussetzung für das Basismaterial, denn auch bei einem IR-absorbierenden Material kann die Reflexion zur Vermeidung einer schädlichen Erhitzung infolge einer IR-Strahlung erwünscht sein.

Die Dicke des Basismaterials ist für die Zwecke der Erfindung nicht maßgeblich. In der Regel sind die Wandungen 1 bis 50 mm, vorzugsweise 1 bis 10 mm dick.

Die IR-reflektierende Überzugsschicht ist in der Regel auf der Oberfläche des Körpers angeordnet, die bei der bestimmungsgemäßen Anwendung an der witterungsabgewandten Seite gelegen ist. Die Beschichtung beider Seiten ist gewünschtenfalls möglich.

Die IR-reflektierenden Teilchen

IR-reflektierende Teilchen sind bekannt, z.B. als sogenannte Perlglanzpigmente. Sie sind schicht- bzw. blättchenförmig aufgebaut. Für die Zwecke der Erfindung werden rotreflektierende Perlglanzpigmente, z.B. Iriodin [R] 219 (E. Merck, Darmstadt) verwendet. Sie bestehen vorzugsweise aus beschichteten blättchenförmigen Mineralstoffen, meist Glimmer, mit einer Dicke von 200 bis 2000 nm, vorzugsweise 300 bis 600 nm, einem Durchmesser von 5 bis 100, vorzugsweise 20 bis 60 Mikrometer und einem mittleren Durchmesser von 20 bis 70, vorzugsweise 20 bis 25 Mikrometer.

Physikalisch beruht die Infrarotreflexion auf einer doppelten Reflexion des Lichtes an der Ober- und Unterseite der oberflächenparallel ausgerichteten Teilchen. Je nach der Dicke des Teilchens und der Wellenlänge des eingestrahlten Lichtes können sich die an der Oberseite und der Unterseite des Teilchens reflektierten Strahlen durch Interferenz entweder verstärken oder auslöschen. Ein Verstärkung der reflektierten Strahlung tritt ein, wenn

$$d = (2x - 1) \, L_r / \, 4n$$

ist, wobei d die Dicke des Teilchens, $x = 1$, $L_r$ die Wellenlänge der reflektierten Strahlung und n der Brechungsindex des Teilchens bei dieser Wellenlänge ist. Dagegen tritt Auslöschung bzw. Abschwächung des reflektierten Lichtes ein, wenn

$$d = (x - 1) \, L_t / \, 2n$$

ist, wobei hier $x = 2$ gilt und $L_t$ die Wellenlänge des Lichts ist, das in diesem Falle nicht reflektiert, sondern durchgelassen wird. Aus einer Verbindung der beiden Gleichungen ergibt sich

$$L_r = 2 \, L_t.$$

Daraus folgt, daß bei einer bestimmten Schichtdicke d Licht der Wellelänge $L_r$ am stärksten reflektiert wird und Licht der halb so großen Wellenlänge $L_t$ am stärksten durchgelassen wird. Die Dicke der Teilchen ist erfindungsgemäß so gewählt, daß das durch das Teilchen hindurchtretende Licht in den sichtbaren Bereich und das von dem Teilchen am stärksten reflektierte Licht in den Infrarotbereich fällt. Da auch rotes sichtbares Licht zum Teil reflektiert wird, sind die erfindungsgemäß geeigneten Teilchen rotreflektierend.

Obwohl verschiedene Pigmente bekannt sind, die das angegebene Verhältnis von Dicke und Brechungsindex erfüllen, wie Titandioxid, insbesondere vom Anatas-Typ, basisches Bleicarbonat oder Wismutoxychlorid, erfüllt nur Titandioxid, das auf einem blättchenförmigen Trägerpigment abgeschieden ist, die vielfältigen Forderungen an das im Sinne der Erfindung einzusetzende Perglanzpigment. Besonders vorteilhaft ist Titandioxid, das auf Glimmerteilchen oder ähnlichen blättchenförmigen Mineralstoffen in definierter Schichtdicke niedergeschlagen wurde. Als Schichtdicke d gilt dann nur die $TiO_2$-Schicht, nicht die Unterlage aus Glimmer. Dieses Pigment ergibt lichtstreuende Beschichtungen, die für alle Arten von Dachverglasungen und Oberlichtern besonders gut geeignet sind.

Die Wirkung der IR-reflektierenden Teilchen hängt von ihrer Ausrichtung parallel zur Scheibenoberfläche und vom Pigmentgehalt der Überzugsschicht ab. Ein Pigmentgehalt von 20 bis 40 Gew.-%, insbesondere 25 bis 30 Gew.-%, ist kritisch, um den erfindungsgemäßen Effekt zu erreichen. Vorzugsweise wird die Menge so gewählt, daß eine Transmission von 45 bis 75 % bei einer Wellenlänge von 380 bis 780 nm, bzw. bei 550 nm und eine Gesamtenergiedurchlässigkeit von 30 bis 60 % erreicht werden. Vorzugsweise beträgt die IR-Reflexion bei einer Wellenlänge von 1000 nm wenigstens 40 %.

Da nur die Teilchen reflexionswirksam sind, die parallel zur Scheibenoberfläche ausgerichtet sind, ist es sinnvoll, für eine möglichst weitgehend oberflächenparallele Orientierung zu sorgen. Die Ausrichtung wird durch eine Scherbewegung in der noch flüssigen Schicht des Überzugsmittels bewirkt. Dazu kann bei der Beschichtung mit pigmentierten Lacken manchmal bereits die Ausrichtung durch übliche Auftragsverfahren, wie Rakeln, ausreichen. Sehr wirksam ist das "Reverse Roll Coating"-Verfahren, bei dem das Überzugsmittel mit einer gegen die Zugrichtung rotierende Walze über die Oberfläche der Scheibe verteilt wird. Die Dicke der getrockneten Schicht kann z.B. 5 bis 40 Mikrometer betragen.

Besonders vorteilhaft ist die Herstellung durch Koextrusion, weil dabei eine überraschend gute Orientierung der lichtreflektierenden Teilchen parallel zur Oberfläche erreicht wird und darüber hinaus kein besonderer Arbeitsgang für die Beschichtung erforderlich ist.

Das Bindemittel

Die Überzugsschicht enthält die lichtreflektierenden Teilchen in einem lichtdurchlässigen haftenden Bindemittel. Die Haftung soll so hoch sein, daß die Beschichtung beim Biegen des Körpers im kalten oder im thermoelastisch erwärmten Zustand nicht abspringt. Die Auswahl von Bindemitteln nach Maßgabe ihrer Haftung an dem zu beschichtenden Substrat ist dem Fachmann geläufig. Im Prinzip können alle zum Binden von Pigmenten gebräuchlichen wasserunlöslichen Bindemittel und die zur ihrer Aufbringung geeigneten Beschichtungsverfahren verwendet werden. Hydrophobe, in Berührung mit Wasser nicht quellende Bindemittel sind bevorzugt. Geeignete lichtdurchlässige Bindemittel sind z.B. Polymerisate von Acryl- und/oder Methacrylsäureestern, Polycarbonate, Polyurethanharze, Polyesterharze, Polystyrol oder Polyvinylchlorid. Im Einzelfall richtet sich die Auswahl nach den Erfordernissen des Beschichtungsverfahrens und den Gebrauchseigenschaften.

Unter den Gesichtspunkten einer guten Haftung an vielen Kunststoffen, einer hohen Witterungs-, Vergilbungs- und Alterungsbeständigkeit sind Bindemittel auf Basis von Polyacrylat-und Polymethacrylat-Kunststoffen besonders gut geeignet. Bindemittel, die thermoplastisch oder wenigstens thermoelastisch sind, bieten den Vorteil, daß sie zusammen mit dem beschichteten Kunststoffkörper gebogen oder reckend verformt werden können, ohne daß die IR-reflektierende Wirkung beeinträchtigt wird. Lineare Reckungsgrade über 10 %, gegebenenfalls über 50 % sind möglich. Dies gilt für physikalisch trocknende, im wesentlichen unvernetzte Bindemittel. Unter Vernetzung härtende Bindemittel, wie Alkydharze oder Reaktivharze auf Basis von mehrfunktionellen Acrylestern, sind geeignet, wenn sie genügend haften und eine Verformung der Überzugsschicht nicht vorgesehen ist.

Ein Anteil von 60 bis 80 Gew.-% des reinen Bindemittels an der IR-reflektierenden Überzugsschicht hat sich bewährt.

Bei der Lackbeschichtung wird die Überzugsschicht aus einem flüssigen Überzugsmittel erzeugt, das neben dem Bindemittel und den IR-reflektierenden Teilchen eine Trägerflüssigkeit für das Bindemittel enthält. Es kann sich um übliche Lacklösemittel handeln, wie Ester, Alkohole, Ether, Ketone, Aromaten, Chlorkohlenwasserstoffe oder deren Gemische. Bei Reaktivharzen übernehmen die mehrfunktionellen Acrylester diese Funktion. Die Menge der Trägerflüssigkeit richtet sich nach dem Verarbeitungsverfahren; sie kann z.B. 30 bis 85 Gew.-% des Überzugsmittels ausmachen.

Das Bindemittel kann in dem Überzugsmittel auch in dispergierter Form vorliegen, vorzugsweise in Form einer wäßrigen Kunststoffdispersion. Sie kann - wie in der Anstrichtechnik geläufig - mit sogenannten Verlaufhilfsmitteln ausgerüstet sein. Darunter versteht man - vorwiegend hochsiedende - organische Löse- bzw. Quellmittel für den dispergierten Kunststoff, wie Methoxypropanol-2 oder Butylglykolacetat, die das Bindemittel vorübergehend weichmachen und während oder nach dem Trocknen verdunsten. Auch wasserlösliche Verdickungsmittel verbessern die Verlaufeigenschaften. Anstatt wäßriger Bindemitteldispersionen sind auch solche in organischen Flüssigkeiten verwendbar.

Wird die Beschichtung aus einem flüssigen Überzugsmittel auf die Oberfläche des festen Substrats aufgebracht, so empfiehlt es sich, die Oberfläche des Substrats zu beschichten, die beim Gebrauch an der witterungsabgewandten Seite liegt.

Wird die Überzugsschicht im Wege der Koextrusion gebildet, so entfällt die Notwendigkeit einer Trägerflüssigkeit. In diesem Falle kann sie auch an der der Witterung ausgesetzten Seite des Subtrats liegen. Bei der Extrusion wird eine dickere Hauptschicht aus lichtdurchlässigem thermoplastischem Kunststoff als Basismaterial gemeinsam mit einer dünneren Schicht des transparenten Bindemittels, das die IR-reflektierenden Teilchen enthält und sonst mit dem Basismaterial übereinstimmen kann, koextrudiert. Während der Strömung der Überzugsschicht durch die Koextrusionsdüse wird eine ausreichende Orientierung der IR-reflektierenden Teilchen bewirkt.

Bei der Koextrusion ist darauf zu achten, daß das blättchenförmige Perglanzpigment möglichst wenig zerrieben und zerkleinert wird, weil dadurch die Selektivität der Beschichtung leiden würde. Es hat sich als vorteilhaft erwiesen, die Schmelzviskosität des pigmentierten Materials für die Bildung der IR-reflektierenden Schicht niedriger als die Schmelzviskosität des Basismaterials einzustellen. Vorzugsweise verhalten sich die Schmelzviskositäten bei der Verarbeitungstemperatur wie 2 : 1 bis 1,5 : 1. Weiterhin ist es vorteilhaft, das Perlglanzpigment in das bereits geschmolzene Bindemittel einzubringen. Dies kann mit einer Pulverdosierschnecke geschehen, die das Pigment in die Einzugszone eines Zweischneckenkneters mit dicht kämmenden Schnecken gleichmäßig einbringt. Der entstehende pigmentierte Schmelzstrom wird in einem Koextrusionsadapter mit der Schmelze des Basismaterials zu einem mehrschichtigen Strang zusammengeführt und in einem herkömmlichen Verteilerkanal auf die gewünschte Bahnbreite gespreitet.

Das Organosilan

Die Wirksamkeit der IR-reflektierenden Teilchen wird durch den Zusatz eines Organosilans gesteigert. Es wird angenommen, daß das Organosilan eine Dispergierwirkung entfaltet und dadurch der Agglomerierungsneigung der IR-reflektierenden Teilchen entgegenwirkt. Die Orientierbarkeit der Teilchen zu einer schuppenartig flächendeckenden Schicht parallel zur Scheibenoberfläche wird dadurch gefördert.

Wegen ihrer Hydrolyseempfindlichkeit eignen sich die Organosilane als Zusatz zu nicht-wäßrigen Überzugsmitteln. Die Organosilane lassen sich durch die allgemeine Formel $R_n$-Si-$(OR')_m$ beschreiben, in der R und R' organische Reste darstellen und $n+m=4$ ist. Vorzugsweise enthalten R und R' jeweils 1 bis 8 Kohlenstoffatome. Bevorzugt sind Alkylreste, Alkenylreste, Aralkylreste, Halogenalkylreste, Alkoxyalkylreste, Aminoalkylreste und Acylreste sowie organische Reste mit Oxirangruppen. Für die dispergierende Wirkung des Organosilans ist dessen Affinität sowohl zu den IR-reflektierenden Teilchen als auch zu dem dem Bindemittel von Bedeutung. Das Organosilan liegt vorzugsweise in dem Überzugslack gelöst vor.

Zu den verwendbaren Organosilanen gehören:

Methyl-trimethoxy-silan,
Methyl-triethoxy-silan,
Ethyl-trimethoxy-silan,
Vinyl-triethoxy-silan
Vinyl-triacetoxy-silan
Vinyl-tri(methoxy-ethoxy)-silan
Chlorpropyl-trimethoxy-silan
Phenyl-triethoxy-silan
Dimethyl-dimethoxy-silan
Methacryloxypropyl-trimethoxy-silan
Methacryloxypropyl-methyl-dimethoxy-silan
Glycidoxypropyl-trimethoxy-silan
Glycidoxyethyl-methyl-dimethoxy-silan
(3,4-Epoxy-cyclohexyl-ethyl)-trimethoxy-silan

Das Organosilan wird vorzugsweise in einer Menge von 1 bis 25 Gew.-%, insbesondere 1 bis 10 Gew.-%, bezogen auf das Gewicht der IR-reflektierenden Teilchen, eingesetzt.

BEISPIELE

1. Beschichtung von Acrylglas mit einem Überzugslack

Eine 3 mm dicke Acrylglas-Platte (aus Polymethylmethacrylat) einer Größe von 300 x 300 mm$^2$ wird einseitig mittels eines Rollcoaters mit einem Überzugslack aus

| 12 Gew.-Tln. | eines Perlglanzpigments, bestehend aus beschichteten Glimmerteilchen einer Größe von 20 bis 100 Mikrometer, mit einer 90 nm dicken Schicht von Rutil-Titandioxid; Handelsbezeichnung Iriodin® 219, Merck |
| 18 Gew.-Tln. | eines Perlpolymerisats aus Methylmethacrylat und Butylacrylat, Lösungsviskosität bei 25ºC in Chloroform: 40 - 50 ml/g; Handelsbezeichnung PLEXIGUM® M 890, Röhm GmbH |
| 0,24 Gew.-Tln. | Chlorpropyl-trimethoxysilan |
| 70 Gew.-Tln. | Methoxypropanol-2 beschichtet. Der Überzugsfilm wird mit einer entgegen der Zugrichtung rotierenden Walze (Reverse Roll) auf Dicken von 30 bis 40 Mikrometer ausgezogen, wobei der für das Perlglanzpigment charakteristische Schimmer auftritt, der die Orientierung der IR-reflektierenden Teilchen anzeigt. Die Schicht wird getrocknet und hat eine Dicke von 10 Mikrometer. Sie enthält 40 Gew.-% bzw. 13 g Pigment/m$^2$. Sie erscheint im Auflicht weißlich mit einem rötlichen Schimmer. Das durchscheinende Licht ist leicht grünlich. |

Drei weitere Beschichtungen von 7, 8 bzw. 13 Mikrometer Dicke werden auf entsprechende Weise erzeugt. Aus Messungen der Transmission T und der Reflexion R bei 1000 nm werden die Gesamtenergiedurchlässigkeit g und die Selektivitätskennzahl auf der beschichteten Seite bestimmt:

| Schichtdicke (Mikrometer) | T (%) | g (%) | T/g |
|---|---|---|---|
| 7 | 66,7 | 54 | 1,24 |
| 8 | 63,2 | 50,6 | 1,25 |
| 10 | 58,3 | 47 | 1,24 |
| 13 | 54,6 | 43,2 | 1,26 |

Zum Vergleich wurden verschiedene käufliche Perglanzpigmente mit unterschiedlichen Dicken der TiO$_2$-Schicht in einer Überzugsdicke von 10 Mikrometer angewendet. Das optische Verhalten geht aus der folgenden Tabelle hervor:

| Perlglanzpigment | | | T % | g % | T/g |
|---|---|---|---|---|---|
| TiO$_2$ (nm) | Reflex.-farbe | Iriodin®-typ | | | |
| 90 | rot | 219 | 58,3 | 47 | 1,24 |
| 130 | blau | 9225 | 66,4 | 58,2 | 1,10 |
| 140 | grün | 9235 | 51,5 | 60,0 | 0,90 |

Demnach wird durch grün-reflektierende Perglanzpigmente die Selektionswirkung verschlechtert, während mit blaureflektierendem Pigment eine geringe Selektionswirkung, jedoch nicht der angestrebte Wert von T/g > 1,15 erreicht wird.

Die mit rotreflektierendem Pigment beschichtete Platte wird am Rand in einen Spannrahmen befestigt, im Umluft-wärmeschrank auf 160°C erhitzt und durch Anlegen von Luftüberdruck auf der beschichteten Seite zu einer Kuppel mit einer Stichhöhe von 100 mm aufgewölbt. Die maximale Reckung beträgt etwa 50 %. Die Beschichtung wirkt in den gereckten und ungereckten Bereichen völlig gleichmäßig.

2. Beschichtung verschiedener Kunststoffe mit Überzugslacken

Entsprechend der Arbeitsweise gemäß Beispiel 1 werden gleichartige Kunststoffscheiben aus Bisphenol-A-Polycarboant, Polystyrol und einem Styrol-Acrylnitril-Copolymerisat beschichtet. Man erhält 10 bis 15 Mikrometer dicke, rot-schimmernde, IR-reflektierende Überzugsschichten mit guter Haftung an dem Basismaterial.

3. Beschichtung von Acrylglas mit einer Überzugsdispersion

Eine 3 mm dicke Acrylglasscheibe einer Größe von 300 x 300 mm$^2$ wird einseitig mit einer Überzugsdispersion aus

| | |
|---|---|
| 24 Gew.-Tln. | (als Festsubstanz gerechnet) einer 50-%igen wäßrigen Polyacrylatdispersion auf Basis von Methylmethacrylat und Butylacrylat, Handelsbezeichnung PLEXTOL® D 540, Röhm GmbH |
| 16 Gew.-Tln. | eines Perlglanzpigments, bestehend aus mit Rutil-Titandioxid beschichteten Glimmerteilchen einer Größe von 20 bis 100 Mikrometer, Handelsbezeichnung Iriodin® 219, Merck |
| 0,4 Gew.-Tln. | Fettalkoholpolyglykolether als nichtionisches Tensid (Handelsbezeichnung GENAPOL® XOPO, Hoechst AG) |
| 15 Gew.-Tln. | Butyl-diglykol-acetat |
| 44,6 Gew.-Tln. | Wasser |

beschichtet. Der Überzugsfilm wird mit einem Rollcoater auf eine Dicke von 50 Mikrometer ausgezogen, wobei Orientierung des Perlglanzpigments eintritt. Die Schicht wird getrocknet und hat eine Dicke von etwa 10 Mikrometer. Sie enthält 40 Gew.-% bzw. 13 g Pigment/m$^2$. Sie erscheint im Auflicht weißlich mit einem rötlichen Schimmer. Das durchscheinende Licht ist leicht grünlich. Optische Eigenschaften: T = 57,9 %, g = 42 %, T/g = 1,38.

4. Beschichtung von PMMA durch Koextrusion

Eine koextrudierbare Beschichtungsmasse wird hergestellt aus 75 Gew.-Teilen einer PMMA-Formmasse mit einer Schmelzviskosität MFI (230°C/3,8) von 25 g/min (Handelstyp PLEXIGLAS®-Formmasse 5N, Röhm GmbH) und 25 Gew.-Teilen rotreflektierendem Perlglanzpigment (Handelstyp Iriodin® 219, E.Merck). Um Bruch der Pigmentblättchen zu vermeiden, wird ein Zweischneckenextruder mit gegenläufig dicht kämmenden Schnecken verwendet und das Pigment direkt in die Schmelze gleichmäßig eingetragen und gut homogenisiert. Die pigmentierte Schmelze hat MFI < 1,4 g/min.

Für die Kernschicht der koextrudierten Platte wird eine PMMA-Formmasse mit einer Schmelzviskosität MFI (230°C/3,8) von 1,4 g/min (Handelstyp PLEXIGLAS®-Formmasse 7H, Röhm GmbH) eingesetzt.

In einem Koextrusions-Lamellenadapter gemäß dem deutschen Patent 40 01 479 werden die Schmelzen beider Massen in einem Dickenverhältnis der Deck- zur Kernschicht von 1 : 150 zusammengeführt und in einer angeschlossenen Schlitzdüse zu einer flachen Bahn extrudiert. Die Kernschicht ist 3 mm und die Deckschicht 20 Mikrometer dick. Optische Eigenschaften: T = 61,7, g = 47,4, T/g = 1,30.

EP 0 548 822 B1

**Patentansprüche**

1. Lichtdurchlässiger, IR-reflektierender Körper mit einer Transmission im sichtbaren Bereich T von 45 bis 75 % und einer Gesamt durchlässigkeit für Strahlungsenergie von 30 bis 60 % so daß die Selektivitätskennzahl nach DIN 67 507, ausgedrückt durch das Verhältnis T/g, größer als 1,15 ist, bestehend aus einem steifen, amorphen Basismaterial aus lichtdurchlässigem Kunststoff und IR-reflektierenden Teilchen, welche aus einer 60 bis 120 nm dicken Schicht von Titandioxid auf einem blättchenförmigen Trägerpigment bestehen und parallel zur Oberfläche ausgerichtet sind,

   dadurch gekennzeichnet, daß
   die IR-reflektierenden Teilchen in einer 5 bis 40 Mikrometer dicken, an dem Basismaterial haftenden Überzugsschicht aus einem transparenten, wasserunlöslichen Bindemittel angeordnet sind, wobei der Anteil der IR-reflektierenden Teilchen 20 bis 40 Gew.-% beträgt, bezogen auf das Gewicht der Überzugsschicht.

2. IR-reflektierender Körper nach Anspruch 1, dadurch gekennzeichnet, daß die IR-reflektierenden, parallel zur Oberfläche ausgerichteten Teilchen aus beschichteten blättchenförmigen Mineralstoffen mit einer Dicke von 200 bis 2000 nm, einem Durchmesser von 5 bis 100 Mikrometer und einem mittleren Durchmesser von 20 bis 70 Mikrometer bestehen.

3. IR-reflektierender Körper nach Anspruch 1 oder 2, gekennzeichnet durch eine Reflexion bei 1000 nm von wenigstens 40 %.

4. IR-reflektierender Körper nach einem oder mehreren der Ansprüche 1 bis 3, dadurch gekennzeichnet, daß das Bindemittel aus einem thermoplastischen oder thermoelastischen Kunststoff besteht.

5. IR-reflektierender Körper nach einem oder mehreren der Ansprüche 1 bis 4, dadurch gekennzeichnet, daß der lichtdurchlässige Kunststoff ein Polymethylmethacrylat- oder Polycarbonat-Kunststoff, Polystyrol oder ein Styrol-Acrylnitril-Copolymerisat ist.

6. IR-reflektierender Körper nach einem oder mehreren der Ansprüche 1 bis 5, dadurch gekennzeichnet, daß er die Gestalt einer ebenen Tafel hat.

7. IR-reflektierender Körper nach einem oder mehreren der Ansprüche 1 bis 5, dadurch gekennzeichnet, daß er die Gestalt einer Stegdoppelplatte oder einer Lichtkuppel hat.

8. IR-reflektierender Körper nach einem oder mehreren der Ansprüche 1 bis 7, dadurch gekennzeichnet, daß er mitsamt der Überzugsschicht um wenigstens 10 % gereckt ist.

9. Verfahren zur Herstellung von ebenen Tafeln oder Stegdoppelplatten nach den Ansprüchen 6 oder 7, dadurch gekennzeichnet, daß das Basismaterial und das Material der Überzugsschicht gemeinsam extrudiert und haftend verbunden werden.

10. Verfahren nach Anspruch 9, dadurch gekennzeichnet, daß das Basismaterial bei der Extrusionstemperatur eine Schmelzviskosität hat, die größer als diejenige des Materials der Überzugsschicht ist, und daß die Schmelzestränge der beiden Materialien in einem Koextrusionsadapter haftend verbunden werden.

11. Verfahren nach Anspruch 10, dadurch gekennzeichnet, daß die rotreflektierenden Teilchen in die Schmelze des transparenten, wasserunlöslichen Bindemittels eingebracht und nach Durchmischung die pigmentierte Schmelze dem Adapter zugeführt wird.

12. Bedachungsmaterial bestehend aus einem lichtdurchlässigen, IR-reflektierenden Körper gemäß den Ansprüchen 1 bis 8.

**Claims**

1. A light-transmissive, IR-reflecting body having a transmission in the visible range T of 45 to 75% and a total transmissivity g of 30 to 60% in respect of radiation energy so that the selectivity constant according to DIN 67507, expressed by the ratio T/g, is greater than 1.15, said body comprising a rigid, amorphous base material made of light-transmissive synthetic material and IR-reflecting particles which comprise a titanium dioxide layer of a thickness of 60 to 120 nm, applied onto a flake-like carrier pigment, and are in parallel alignment relative to the surface, characterised in that the IR-reflecting particles are arranged in a cover layer of a thickness of 5 to 40 micrometers which adheres to the base material and comprises a transparent, water-insoluble binding agent, the proportion of the IR-reflecting particles being 20 to 40 wt.% based on the weight of the cover layer.

2. An IR-reflecting body according to claim 1, characterised in that the IR-reflecting particles arranged in parallel alignment to the surface consist of coated, flake-like mineral substances of a thickness of 200 to 2,000 nm, a diameter of 5 to 100 micrometers and an average diameter of 20 to 70 micrometers.

3. An IR-reflecting body according to claim 1 or 2, characterised by a reflection of at least 40% at 1000 nm.

4. An IR-reflecting body according to one or more of claims 1 to 3, characterised in that the binding agent is a thermoplastic or thermoelastic material.

5. An IR-reflecting body according to one or more of claims 1 to 4, characterised in that the light-transmissive synthetic material is a polymethylmethacrylate or polycarbonate material, polystyrene or a styrene/acrylonitrile copolymer.

6. An IR-reflecting body according to one or more of claims 1 to 5, characterised in that it is in the form of a flat board.

7. An IR-reflecting body according to one or more of claims 1 to 5, characterised in that it has the form of a web double-plate or a light dome.

8. An IR-reflecting body according to one or more of claims 1 to 7, characterised in that it is stretched by at least 10%, together with the cover layer.

9. A process for preparing flat boards or web double-plates according to claims 6 or 7, characterised in that the base material and the material of the cover layer are jointly extruded and adheringly connected.

10. A process according to claim 9, characterised in that the base material has a melt viscosity at the extrusion temperature which is greater than that of the material of the cover layer and that the molten strands of the two materials are adheringly connected in an coextrusion adaptor.

11. A process according to claim 10, characterised in that the red-reflecting particles are introduced into the melt of the transparent, water-insoluble binding agent, and that the pigmented melt is supplied to the adaptor after being thoroughly mixed.

12. A roofing material comprising a light-transmissive, IR-reflecting body according to claims 1 to 8.

## Revendications

1. Corps transparent réfléchissant l'infrarouge, ayant une transmission T dans le domaine visible de 45 à 75% et une perméabilité totale g pour l'énergie rayonnante de 30 à 60%, de sorte que le nombre caractéristique de sélectivité selon la norme DIN 67 507, exprimé par le rapport T/g, est supérieur à 1,15, se composant d'une matière de base rigide et amorphe en matière plastique transparente et de particules réfléchissant l'infrarouge qui sont constituées par une couche de dioxyde de titane de 60 à 120 nm d'épaisseur sur un pigment de support lamellaire et qui sont orientées parallèlement à la surface,

   caractérisé en ce que
   les particules réfléchissant l'infrarouge sont disposées dans une couche de revêtement de 5 à 40 µm d'épaisseur, adhérant à la matière de base, en un liant transparent et insoluble dans l'eau, la part des particules réfléchissant l'infrarouge étant comprise entre 20 et 40% en poids par rapport au poids de la couche de revêtement.

2. Corps réfléchissant l'infrarouge selon la revendication 1, caractérisé en ce que les particules réfléchissant l'infrarouge, orientées parallèlement à la surface, sont faites de matières minérales lamellaires enduites, ayant une épaisseur de 200 à 2000 nm, un diamètre de 5 à 100 µm et un diamètre moyen de 20 à 70 µm.

3. Corps réfléchissant l'infrarouge selon la revendication 1 ou 2, caractérisé par une réflexion à 1000 nm d'au moins 40%.

4. Corps réfléchissant l'infrarouge selon l'une quelconque des revendications 1 à 3, caractérisé en ce que le liant se compose d'une matière thermoplastique ou thermoélastique.

5. Corps réfléchissant l'infrarouge selon l'une quelconque des revendications 1 à 4, caractérisé en ce que la matière plastique transparente est une matière plastique de polyméthacrylate de méthyle ou de polycarbonate, un polystyrène ou un copolymère styrène/acrylonitrile.

6. Corps réfléchissant l'infrarouge selon l'une quelconque des revendications 1 à 5, caractérisé en ce qu'il a la forme d'un panneau plat.

7. Corps réfléchissant l'infrarouge selon l'une quelconque des revendications 1 à 5, caractérisé en ce qu'il a la forme d'une plaque double à nervures d'entretoisement ou d'une coupole d'éclairage.

8. Corps réfléchissant l'infrarouge selon l'une quelconque des revendications 1 à 7, caractérisé en ce qu'il est étiré d'au moins 10% avec la couche de revêtement.

9. Procédé de fabrication de panneaux plats ou de plaques doubles à nervures d'entretoisement selon la revendication 6 ou 7, caractérisé en ce que la matière de base et la matière de la couche de revêtement sont extrudées en commun et unies par adhérence.

10. Procédé selon la revendication 9, caractérisé en ce que la matière de base a, à la température d'extrusion, une viscosité à l'état fondu qui est supérieure à celle de la matière de la couche de revêtement, et en ce que les extrudats fondus des deux matières sont unis par adhérence dans un adaptateur de co-extrusion.

11. Procédé selon la revendication 10, caractérisé en ce que les particules réfléchissant l'infrarouge sont introduites dans la masse fondue du liant transparent, insoluble dans l'eau et, après mélange intime, la masse fondue pigmentée est envoyée dans l'adaptateur.

12. Matériau de couverture, constitué par un corps transparent réfléchissant l'infrarouge selon l'une quelconque des revendications 1 à 8.